# EUROPEAN PATENT APPLICATION

(11) **EP 1 282 329 A1**
(43) Date of publication of application: **05.02.2003**
(21) Application number: 01917569.4
(22) Date of filing: 28.03.2001
(51) Int. Cl.: H04Q 11/04

(54) **DIGITAL CIRCUIT MULTIPLEXING DEVICE**

(71) Applicant: MITSUBISHI DENKI KABUSHIKI KAISHA, Tokyo 100-8310 (JP)
(72) Inventor: OZU, Toshihisa MITSUBISHI DENKI KABUSHIKI KAISHA, Chiyoda-ku, Tokyo 100-8310 (JP)
(74) Representative: Popp, Eugen, Dr.
(86) International application number: JP0102597
(87) International publication number: WO02080612

(57) **Abstract**

The present invention provides digital circuit multiplication equipment comprising: a selector 3; a 40-Kbit/s VBD encoder 4, an 8-Kbit/s voice encoder 5; a fax demodulator 6; a multiplexer 7; a clear channel request monitor 2 for detecting a 64-Kbit/s clear channel request from a data stream transmitted through a trunk circuit 1; an IP packet assembler 9 for generating IP packets from a PCM signal on a channel indicated by the clear channel request, the PCM signal being output from the selector 3; and an IP interface 10 for outputting the IP packets to an IP network.

## Description

### Technical Field

The present invention relates to digital circuit multiplication equipment (DCME) for multiplexing a voice signal, a voice-band signal, etc. transmitted through a plurality of trunk circuits in order to transmit these signals using a single bearer circuit.

### Background Art

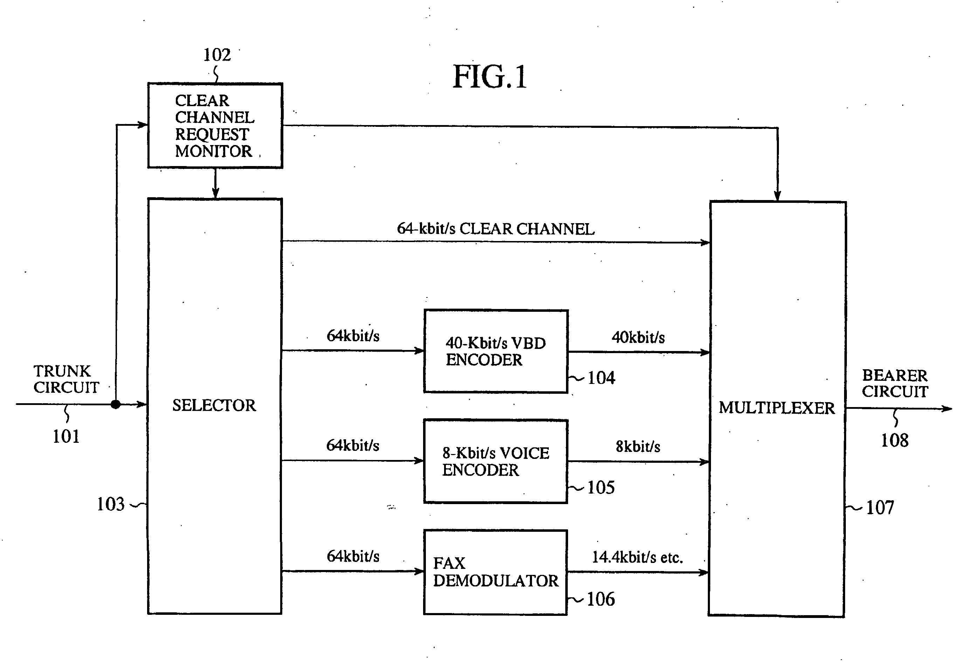

Fig. 1 is a block diagram showing the configuration of conventional digital circuit multiplication equipment. In the figure, reference numeral 101 denotes a trunk circuit through which a PCM (Pulse Code Modulation) signal is transmitted; 102 a clear channel request monitor for detecting a 64-Kbit/s clear channel request from a data stream transmitted through the trunk circuit 101; 103 a selector; 104 a 40-Kbit/s VBD (Voice Band Data) encoder for data-compressing a voice-band signal; 105 an 8-Kbit/s voice encoder for data-compressing a voice signal; 106 a fax demodulator for demodulating a facsimile signal; 107 a multiplexer for multiplexing signals; and 108 a bearer circuit.

The operation of the digital circuit multiplication equipment shown in Fig. 1 will be described below. The selector 103 determines whether the PCM signal on each channel transmitted through the trunk circuit 101 is a voice signal or a voice-band signal, and if it is a voice-band signal, the selector 103 further determines whether the voice-band signal is a facsimile signal or another type of voice-band signal. Furthermore, based on the signal identification information for each channel, the selector 103 outputs voice-band signals other than facsimile signals to the 40-Kbit/s VBD encoder 104, voice signals to the 8-Kbit/s voice encoder 105, and facsimile signals to the fax demodulator 106. However, if the clear channel request monitor has detected a 64-Kbit/s clear channel request, which is attached using a procedure specified by the ITU-T Recommendation Q.50 (a digital telephone circuit communication protocol hereinafter referred to as the Q.50 signaling), the selector 103 outputs the PCM signal on the channel indicated by the 64-Kbit/s clear channel request to the multiplexer 107 while maintaining its original transmission speed (64 Kbits/s). The 40-Kbit/s VBD encoder 104 data-compresses a voice-band signal to produce a voice-band-data-encoded signal. The 8-Kbit/s voice encoder 105 data-compresses a voice signal to produce an encoded voice signal. The fax demodulator 106 demodulates a facsimile signal to produce a demodulated signal. The multiplexer 107 receives the PCM signal directly output from the selector 103 based on the 64-Kbit/s clear channel request, the voice-band-data-encoded signal output from the 40-Kbit/s VBD encoder 104, the voice-encoded signal output from the 8-Kbit/s voice encoder 105, and the demodulated signal output from the fax demodulator 106, and outputs the received signals to the bearer circuit 108 after multiplexing them.

In the conventional digital circuit multiplication equipment, configured as described above, a transmission speed of 64 Kbits/s is set for the PCM signal on the channel indicated by a 64-Kbit/s clear channel request attached based on the Q.50 signaling as a channel setting for the bearer circuit 108, making thus impossible to efficiently transmit data.

The present invention has been devised to solve the above problem. Therefore, it is an object of the present invention to provide digital circuit multiplication equipment having enhanced transmission efficiency.

### Disclosure of Invention

Digital circuit multiplication equipment according to the present invention comprises: clear channel request detecting means for monitoring a data stream transmitted through a trunk circuit, and detecting a clear channel request for an arbitrary channel set in the trunk circuit, the clear channel request indicating that data compression is not required for an encoded signal transmitted through the arbitrary channel; transmission route switching means for, from the clear channel request detecting means, receiving information on whether a clear channel request exists, determining a type of an encoded signal input through the trunk circuit for each channel, and outputting the encoded signal for each channel to a different transmission route based on the information on whether a clear channel request exists and signal identification information; a plurality of data compressing means each for receiving an encoded signal which does not include a clear channel request, data-compressing the encoded data (signal), and outputting the compressed encoded signal; multiplexing means for receiving the encoded signal from each data compressing means, and multiplexing the encoded signal before outputting it to a bearer circuit; IP packet generating means for receiving an encoded signal which includes a clear channel request, and packetizing the encoded data (signal) to generate IP packets; and IP interfacing means for outputting the generated IP packets to an IP network.

With this arrangement, the encoded signal on a channel indicated by a clear channel request is transmitted through an IP network, eliminating the need for setting a corresponding channel in the bearer circuit. Therefore, it is possible to limit signals to be transmitted through the bearer circuit to only data-compressed encoded signals, making it possible to enhance the transmission efficiency.

Digital circuit multiplication equipment according to the present invention comprises: clear channel request detecting means for monitoring a data stream transmitted through a trunk circuit, and detecting a clear channel request for an arbitrary channel set in the trunk circuit, the clear channel request indicating that data compression is not required for an encoded signal transmitted through the arbitrary channel; transmission route switching means for, from the clear channel request detecting means, receiving information on whether a clear channel request exists, determining a type of an encoded signal input through the trunk circuit for each channel, and outputting the encoded signal for each channel to a different transmission route based on the information on whether a clear channel request exists and signal identification information; a plurality of data compressing means each for receiving an encoded signal which does not include a clear channel request, data-compressing the encoded data (signal), and outputting the compressed encoded signal; multiplexing means for receiving the encoded signal from each data compressing means, and multiplexing the encoded signal before outputting it to a bearer circuit; ATM cell generating means for receiving an encoded signal which includes a clear channel request, and converting the encoded data (signal) to generate ATM cells; and ATM interfacing means for outputting the generated ATM cells to an ATM network.

With this arrangement, the encoded signal on a channel indicated by a clear channel request is transmitted through an ATM network, eliminating the need for setting a corresponding channel in the bearer circuit. Therefore, it is possible to limit signals to be transmitted through the bearer circuit to only data-compressed encoded signals, making it possible to enhance the transmission efficiency.

### Brief Description of the Drawings

Fig. 1 is a block diagram showing the configuration of conventional digital circuit multiplication equipment.
Fig. 2 is a block diagram showing the configuration of a digital circuit multiplication equipment according to a first embodiment of the present invention.
Fig. 3 is a block diagram showing the configuration of digital circuit multiplication equipment according to a second embodiment of the present invention.

### Best Modes for Carrying Out the Invention

In order to provide detailed description of the present invention, preferred embodiments of the present invention will be described with reference to the accompanying drawings.

### (First Embodiment)

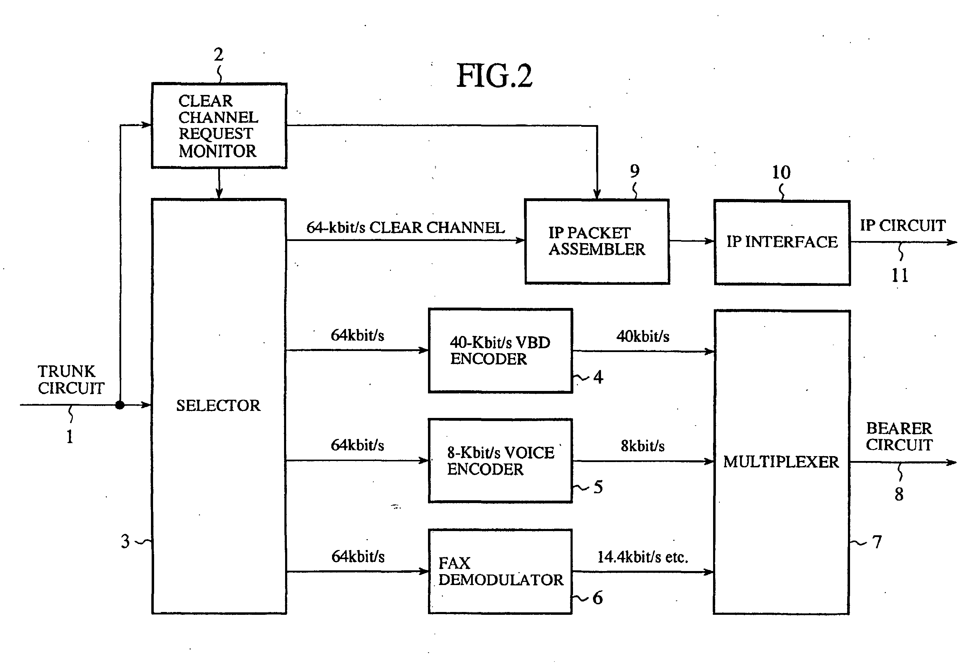

Fig. 2 is a block diagram showing digital circuit multiplication equipment according to a first embodiment of the present invention. In the figure, reference numeral 1 denotes a trunk circuit with a transmission speed of 2 Mbits/s through which PCM signals such as a voice signal, a voice-band signal, and a facsimile signal are transmitted; 2 a clear channel request monitor (clear channel request detecting means) for detecting a 64-Kbit/s clear channel request indicating that data compression in the DCME is not required for an arbitrary channel set in the trunk circuit 1; 3 a selector (transmission route switching means) for determining the type of the input PCM signal on each channel (its transmission speed is 64 Kbits/s) set in the trunk circuit 1 as well as switching PCM-signal transmission routes based on signal identification information on each channel and based on information provided by the clear channel request monitor 2 indicating whether a 64-Kbit/s clear channel request exists (this information is hereinafter referred to as clear channel request availability information); 4 a 40-Kbit/s VBD encoder (data compressing means) for applying ADPCM encoding to a voice-band signal having a transmission speed of 64 Kbits/s to produce a voice-band-data-encoded signal having a transmission speed of 40 Kbits/s; 5 an 8-Kbit/s voice encoder (data compressing means) for applying high-efficiency voice encoding and silence suppression to a voice signal having a transmission speed of 64-Kbit/s to produce a voice-encoded signal having a transmission speed of 8 Kbits/s; 6 a fax demodulator (data compressing means) for demodulating a facsimile signal having a transmission speed of 64 Kbits/s to produce a demodulated signal having a transmission speed of 14.4 Kbits/s, 9.6 Kbits/s, etc. determined based on the type of the transmission system; 7 a multiplexer (multiplexing means) for receiving the voice-band-data-encoded signal output from the 40-Kbit/s VBD encoder 4, the voice-encoded signal output from the 8-Kbit/s voice encoder 5, and the demodulated signal output from the fax demodulator 6, and multiplexing and then outputting the received encoded signals; 8 a bearer circuit with a transmission speed of 2 Mbits/s for transmitting the multiplexed signal output from the multiplexer 7; 9 an IP packet assembler (IP packet generating means) for receiving a PCM signal with a transmission speed of 64 Kbits/s output from the selector 3 based on clear channel request availability information provided by the clear channel request monitor 2, and packetizing the received PCM data into IP packets; 10 an IP interface (IP interfacing means) for receiving the IP packets from the IP packet assembler 9 and outputting the IP packets to an IP network; and 11 an IP circuit.

Description will be made of detection of a 64-Kbit/s clear channel request. A digital telephone circuit with a transmission speed of 2 Mbits/s employs the following data transmission format. A multiframe (a data transmission unit of 2 ms) is made up of 16 frames. Furthermore, each frame includes 32 time slots. Since information on the 64-Kbit/s clear channel request is written in the seventeenth time slot (TS16), the clear channel request monitor 2 monitors the time slot TS16 to determine whether a 64-Kbit/s clear channel request exists.

Description will be made below of the operation of the digital circuit multiplication equipment shown in Fig. 2. The clear channel request monitor 2 monitors the time slot TS16 in the data stream transmitted through the trunk circuit 1 to determine whether a 64-Kbit/s clear channel request issued based on the Q.50 signaling exists, and outputs clear channel request availability information created based on the determination result to the selector 3 and the IP packet assembler 9. The selector 3 determines whether the PCM signal on each channel transmitted through the trunk circuit 1 is a voice signal or a voice-band signal, and if it is a voice-band signal, the selector 3 further determines whether the voice-band signal is a facsimile signal or another type of voice-band signal.

Furthermore, based on the clear channel request availability information for each channel, the selector 3 checks whether a 64-Kbit/s clear channel request exists, and if a 64-Kbit/s clear channel request exists for a channel, the selector 3 outputs the PCM signal on the channel to the IP packet assembler 9 while maintaining its original transmission speed. If no 64-Kbit/s clear channel request exists, the selector 3 outputs voice-band signals other than facsimile signals to the 40-Kbit/s VBD encoder 4, voice signals to the 8-Kbit/s voice encoder 5, and facsimile signals to the fax demodulator 6, based on the signal identification information for each channel.

The 40-Kbit/s VBD encoder 4 data-compresses a voice-band signal having a transmission speed of 64 Kbits/s, such as a data modem signal, received from the selector 3 by applying ADPCM encoding to the signal, and outputs the compressed voice-band-data-encoded signal having a transmission speed of 40 Kbits/s to the multiplexer 7. The 8-Kbit/s voice encoder 5 data-compresses a voice signal having a transmission speed of 64 Kbits/s received from the selector 3 by applying high-efficiency voice encoding and silence suppression to the signal, and outputs the compressed voice-encoded signal having a transmission speed of 8 Kbits/s to the multiplexer 7. The fax demodulator 6 demodulates a 64-Kbit/s facsimile signal received from the selector 3 based on the type of the transmission system, and outputs the demodulated signal having a transmission speed of 14.4 Kbits/s, 9.6 Kbits/s, etc. to the multiplexer 7.

The multiplexer 7 receives the voice-band-data-encoded signal output from the 40-Kbit/s VBD encoder 4, the voice-encoded signal output from the 8-Kbit/s voice encoder 5, and the demodulated signal output from the fax demodulator 6, and outputs the received encoded signals to the bearer circuit 8 with a transmission speed of 2 Mbits/s after multiplexing the signals.

For a channel indicated by a 64-Kbit/s clear channel request attached based on the Q.50 signaling, the IP packet assembler 9 receives a PCM signal having a transmission speed of 64 Kbits/s from the selector 3 based on clear channel request availability information provided by the clear channel request monitor 2, packetizes the received PCM data to generate IP packets, and outputs the generated IP packets to the IP interface 10. The IP interface 10 outputs the received IP packets to the IP circuit 11 in order to transmit the encoded data for the corresponding channel through an IP network.

As described above, the first embodiment comprises: the clear channel request monitor 2 for monitoring the time slot TS16 in the data stream transmitted through the trunk circuit 1 to detect a 64-Kbit/s clear channel request attached based on the Q.50 signaling; the selector 3 for, based on clear channel request availability information and signal identification information, outputting a PCM signal which includes a 64-Kbit/s clear channel request to the IP packet assembler 9, and outputting a PCM signal which does not include a 64-Kbit/s clear channel request to the 40-Kbit/s VBD encoder 4, the 8-Kbit/s voice encoder 5, or the fax demodulator 6; the multiplexer 7 for receiving encoded signals output from the 40-Kbit/s VBD encoder 4, the 8-Kbit/s voice encoder 5, and the fax demodulator 6, and outputting the encoded signals to the bearer circuit 8 after multiplexing them; the IP packet assembler 9 for receiving a PCM signal including a clear channel request and packetizing the received PCM signal to generate IP packets; and the IP interface 10 for outputting the generated IP packets to an IP network. This arrangement eliminates the need for setting a channel whose transmission speed is 64 Kbits/s in the bearer circuit 8. Therefore, the bearer circuit 8 only needs to transmit data-compressed encoded signals, making it possible to enhance the transmission efficiency.

### (Second Embodiment)

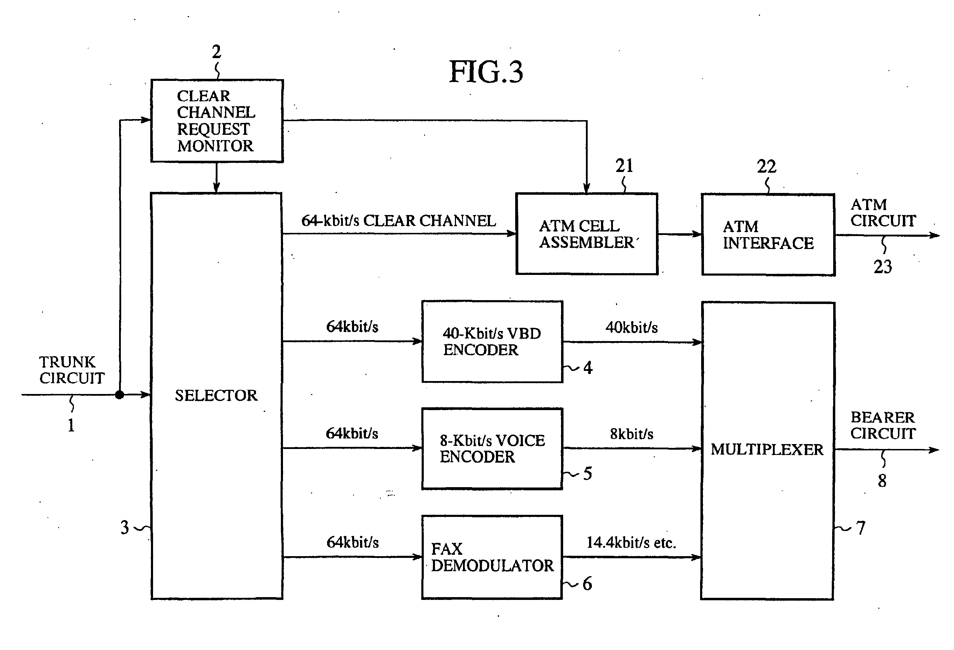

Fig. 3 is a block diagram showing the configuration of digital circuit multiplication equipment according to a second embodiment of the present invention. Components in the figure which are the same as or correspond to those in Fig. 2 are denoted by like numerals to omit their explanation. Reference numeral 21 denotes an ATM cell assembler (ATM cell generating means) for, based on clear channel request availability information provided by the clear channel request monitor 2, receiving a PCM signal having a transmission speed of 64 Kbits/s from the selector 3, and converting the received PCM data into ATM cells; 22 denotes an ATM interface (ATM interfacing means) for outputting the ATM cells output from the ATM cell assembler 21 to an ATM network; and 23 denotes an ATM circuit.

Description will be made below of the operation of the digital circuit multiplication equipment shown in Fig. 3. It should be noted that since the basic operation is the same as that of the digital circuit multiplication equipment of the first embodiment, the following description explains the operations of the ATM cell assembler 21, the ATM interface 22, etc. which characterize the digital circuit multiplication equipment of the second embodiment.

Based on the clear channel request availability information for each channel, the selector 3 checks whether a 64-Kbit/s clear channel request exists, and if a 64-Kbit/s clear channel request exists for a channel, the selector 3 outputs the PCM signal on the channel to the ATM cell assembler 21 while maintaining its original transmission speed.

For a channel indicated by a 64-Kbit/s clear channel request attached based on the Q.50 signaling, the ATM cell assembler 21 receives a PCM signal having a transmission speed of 64 Kbits/s from the selector 3 based on clear channel request availability information provided by the clear channel request monitor 2, converts the received PCM data to generate ATM cells, and outputs the generated ATM cells to the ATM interface 22. The ATM interface 22 outputs the received ATM cells to the ATM circuit 23 in order to transmit the encoded data for the corresponding channel through an ATM network.

As described above, the second embodiment comprises: the clear channel request monitor 2; the selector 3 for, based on clear channel request availability information and signal identification information, outputting a PCM signal which includes a 64-Kbit/s clear channel request to the ATM cell assembler 21, and outputting a PCM signal which does not include a 64-Kbit/s clear channel request to the 40-Kbit/s VBD encoder 4, the 8-Kbit/s voice encoder 5, or the fax demodulator 6; the multiplexer 7 for receiving the encoded signals output from the 40-Kbit/s VBD encoder 4, the 8-Kbit/s voice encoder 5, and the fax demodulator 6, and outputting the encoded signals to the bearer circuit 8 after multiplexing them; the ATM cell assembler 21 for receiving a PCM signal which includes a clear channel request and converting the received PCM signal to generate ATM cells; and the ATM interface 22 for outputting the generated ATM cells to an ATM network. This arrangement eliminates the need for setting a channel whose transmission speed is 64 Kbits/s in the bearer circuit 8. Therefore, the bearer circuit 8 only needs to transmit data-compressed encoded signals, making it possible to enhance the transmission efficiency.

It should be noted that the types of digital circuit multiplication equipment according to the first and second embodiments described above are only examples of the present invention. They are intended in no way to limit the technical scope of the present invention. The technical scope of the invention is defined based on the appended claims, and therefore the present invention includes technical ideas equivalent to the appended claims and various design modifications made within the scope of the appended claims.

### Industrial Applicability

As described above, the digital circuit multiplication equipment according the present invention is suitable for efficiently transmitting data.

## Claims

1. Digital circuit multiplication equipment comprising:
clear channel request detecting means (2) for monitoring a data stream transmitted through a trunk circuit (1), and detecting a clear channel request for an arbitrary channel set in said trunk circuit, said clear channel request indicating that data compression is not required for an encoded signal transmitted through said arbitrary channel;
transmission route switching means (3) for, from said clear channel request detecting means (2), receiving information on whether a clear channel request exists, determining a type of an encoded signal input through said trunk circuit for each channel, and outputting said encoded signal for each channel to a different transmission route based on said information on whether a clear channel request exists and signal identification information;
a plurality of data compressing means (4,5,6) each for receiving an encoded signal which does not include a clear channel request, data-compressing said encoded data (signal), and outputting said compressed encoded signal;
multiplexing means (7) for receiving said encoded signal from each data compressing means (4,5,6), and multiplexing said encoded signal before outputting it to a bearer circuit (8);
IP packet generating means (9) for receiving an encoded signal which includes a clear channel request, and packetizing said encoded data (signal) to generate IP packets; and
IP interfacing means (10) for outputting said generated IP packets to an IP network.

2. Digital circuit multiplication equipment comprising:
clear channel request detecting means (2) for monitoring a data stream transmitted through a trunk circuit (1), and detecting a clear channel request for an arbitrary channel set in said trunk circuit, said clear channel request indicating that data compression is not required for an encoded signal transmitted through said arbitrary channel;
transmission route switching means (3) for, from said clear channel request detecting means, receiving information on whether a clear channel request exists, determining a type of an encoded signal input through said trunk circuit for each channel, and outputting said encoded signal for each channel to a different transmission route based on said information on whether a clear channel request exists and signal identification information;
a plurality of data compressing means (4,5,6) each for receiving an encoded signal which does not include a clear channel request, data-compressing said encoded data (signal), and outputting said compressed encoded signal;
multiplexing means (7) for receiving said encoded signal from each data compressing means (4,5,6), and multiplexing said encoded signal before outputting it to a bearer circuit (8);
ATM cell generating means (21) for receiving an encoded signal which includes a clear channel request, and converting said encoded data (signal) to generate ATM cells; and
ATM interfacing means (22) for outputting said generated ATM cells to an ATM network.
